# EUROPÄISCHE PATENTSCHRIFT

(11) **EP 2 392 612 B1**
(45) Veröffentlichungstag und Bekanntmachung des Hinweises auf die Patenterteilung: **11.01.2017**
(21) Anmeldenummer: 11166037.9
(22) Anmeldetag: 13.05.2011
(51) Int. Cl.: C08K 3/22, C08K 5/31, C08K 5/3492

(54) **FLAMMGESCHÜTZTE HALOGENHALTIGE POLYMERE MIT VERBESSERTER THERMOSTABILITÄT**
FLAME-PROOF POLYMERS CONTAINING HALOGEN WITH IMPROVED THERMOSTABILITY
POLYMÈRES CONTENANT UN HALOGÈNE IGNIFUGE AYANT UNE STABILITÉ THERMIQUE AMÉLIORÉE

(30) Priorität: 14.05.2010 DE 102010020486
(43) Veröffentlichungstag der Anmeldung: 07.12.2011
(73) Patentinhaber: J.M. Huber Corporation, Atlanta, GA 30339 (US)
(72) Erfinder: DAVE,, Dr. Trupti, 64673, Zwingenberg (DE); WEHNER,, Dr. Wolfgang, 64673, Zwingenberg (DE)
(74) Vertreter: Wibbelmann, Jobst

(56) Entgegenhaltungen:
- EP-A1- 1 710 275
- DE-A1-102005 038 277

## Beschreibung

Die Erfindung betrifft flammgeschützte halogenhaltige Polymere mit hoher Thermostabilität, Polymerzusammensetzungen enthaltend mindestens ein flammgeschütztes halogenhaltiges Polymer sowie Formkörper aus einem flammgeschützten halogenhaltigen Polymer und die Verwendung der Polymere.

Die meisten Polymerwerkstoffe sind brennbar. Für viele Anwendungen in der Bau-, Möbel-, Fahrzeug- oder Elektroindustrie ist es deshalb notwendig, Polymere feuerhemmend auszurüsten. Dies gelingt durch den Zusatz von Flammschutzmitteln zu dem jeweiligen Polymerwerkstoff.
Für die Herstellung von Formteilen, wie Kabelummantelungen, Fußböden und Dachfolien wird hauptsächlich Polyvinylchlorid (PVC) als Polymerwerkstoff eingesetzt.

Als untoxische und nichtkorrosive Flammschutzmittel werden in zunehmendem Maße Hydroxide von 2- und 3-wertigen Metallen eingesetzt. Besondere Bedeutung haben dabei Aluminium- und Magnesiumhydroxid erlangt (Plastics Additives Handbook, edited by H. Zweifel, Carl Hanser Verlag, 2001, S. 681-697). Beide Hydroxide setzen im Temperaturbereich zwischen 200-400 °C Wasser frei, welches durch Verdampfung Energie aufnimmt und somit zur Kühlung des polymeren Werkstoffs führt. Darüber hinaus wird die Rauchdichte reduziert.

Ein Nachteil dieser Flammschutzmittel auf Hydroxid-Basis besteht aber in der sehr hohen Dosierung, die notwendig ist, um Polymerwerkstoffe so hinreichend flammgeschützt auszurüsten, dass sie die erforderlichen Brandprüfungen bestehen. Durch den hohen Füllgrad verschlechtern sich die Extrusions- und mechanischen Eigenschaften in hohem Maße.
Besonders bei Einsatz von Aluminiumhydroxid als Flammschutzmittel in PVC wird aber zusätzlich die Thermostabilität von PVC negativ beeinträchtigt.

Eine weitere Herausforderung bei der Verarbeitung von halogenhaltigen Kunststoffen, hauptsächlich PVC, stellen deren Abbau- beziehungsweise Zersetzungsreaktionen dar. Um dem entgegenzuwirken, müssen in der Praxis Stabilisatoren auf Basis von Pb, Sn, Ca/Zn oder organische Verbindungen zugesetzt werden.

DE-A 199 21 472 beschreibt Polymerzusammensetzungen, wobei Kombinationen von Aluminiumtrihydroxid (ATH) mit aminisch interkalierten Schichtsilikaten als Flammschutzmittel eingesetzt werden.

Triethanol-Talgammonium-modifizierte Montmorillonite und -Hectorite üben ebenfalls einen negativen Einfluss auf die Thermostabilität, insbesondere auf Anfangsfarbe und Farbhaltung von PVC aus (Dr. Günter Beyer, Fire Resistance 2007-Konf. in Köln).

Es hat daher nicht an Versuchen gefehlt, die Einsatzmenge dieser Flammschutzmittel auf Hydroxid-Basis durch Kombination mit weiteren organischen bzw. anorganischen Flammschutzmitteln zu reduzieren und die Thermostabilität von PVC zu verbessern.

US-A 6,084,013 offenbart Stabilisatorkombinationen, unter anderem umfassend Aluminiumhydroxid und Perchloratsalz zur Thermostabilisierung von PVC, wobei die Einsatzmenge von Aluminiumhydroxid höchstens 10phr beträgt.

DE 602 16 145 (T2) beschreibt Kombinationen von ATH mit Perchloratsalzen in PVC, wobei der ATH-Anteil 60phr beträgt.

DE-A-10 2005 038277 offenbart eine Stabilisatorzusammensetzung aus einem halogenhaltigen Harz, einem Cyanoguanidin und Kalziumhydroxid.

Aus der EP-A-1 710 275 sind Stabilisatorzusammensetzungen für halogenhaltige Polymere bekannt, welche Melaminphosphat und Zinkhydroxid enthalten können.

Nachteilig aus dem Stand der Technik sind die dennoch teilweise ungenügenden flammschützenden Eigenschaften dieser Stabilisatorkombinationen und Zusätze sowie die mangelhaften mechanischen Eigenschaften der daraus hergestellten Formteile.

Die Aufgabe besteht darin, flammgeschützte halogenhaltige Polymere bereitzustellen, die sowohl eine gute Thermostabilisierung als auch gute mechanische Eigenschaften aufweisen. Diese guten mechanischen Eigenschaften sollen sich insbesondere auf die Reißfestigkeit, die Zugbeanspruchung sowie die Dehnungsspannung beziehen.

Die Aufgabe wird gelöst durch die Bereitstellung eines flammgeschützten halogenhaltigen Polymers enthaltend die Komponenten
(A) mindestens ein Hydroxid ausgewählt aus der Gruppe bestehend aus Aluminiumhydroxid, Magnesiumhydroxid, Calciumhydroxid, Zinkhydroxid, deren Doppelhydroxide und Hydromagnesit,
(B) mindestens ein oder mehrere Melamin- und/oder Guanidinsalze,
(C) mindestens einen Thermostabilisator, wobei dieser ein Metallcarboxylat ist.

Das halogenhaltige Polymer ist Polyvinylchlorid.

Als Komponente (A) ist bevorzugt Aluminiumhydroxid (ATH) in Form von Gibbsit und Boehmit. Neben Gibbsit und Boehmit sind auch die anderen Modifikationen Bayerit, Nordstrandit und Diaspor anzuführen. Als Doppelhydroxide (Layered Double Hydroxides) sind bevorzugt Magnesium-Aluminium-Verbindungen (Hydrotalcite) sowie Calcium-Aluminium-Verbindungen (CAHC). Einzelheiten sind hierfür aus EP-A 0189 899, WO-A 2008/061664 und WO-A 2008/061665 zu entnehmen.

In einer besonders bevorzugten Ausführungsform enthält das flammgeschützte halogenhaltige Polymer die Komponenten
(A) Aluminiumhydroxid und/oder Magnesiumhydroxidm und/oder
(B) Melamincyanurat und/oder ein Melaminphosphat und/oder Guanidinphosphat.

Die Komponente (A) bzw. deren Mischungen werden in einer Menge von 20-80 Gew.-Teilen, bezogen auf 100 Gew.-Teile PVC, angewandt.

In einer weiteren, bevorzugten Ausführungsform ist die Komponente (B) ausgewählt aus der Gruppe bestehend aus Melamincyanurat, Melamin-ortho-Phosphat, Melaminpyro-phosphat, Melaminpolyphosphat und Melaminborat und Guanidinphosphat.

Die Komponente (B) bzw. deren Mischungen können in einer Menge von beispielsweise 1,0 bis 20 Gew.-Teilen, bevorzugt 3,0 bis 15 Gew.-Teilen und besonders bevorzugt 5,0 bis 10.0 Gew.-Teilen bezogen auf 100 Gew.-Teile PVC, angewandt werden.

### Metallseifen

Metallseifen sind in der Hauptsache Metallkarboxylate, bevorzugt längerkettiger Karbonsäuren. Geläufige Beispiele sind Stearate und Laurate, auch Oleate und Salze kürzerkettiger aliphatischer oder aromatischer Karbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Zitronensäure, Benzoesäure, Salizylsäure, Phthalsäuren, Hemimellitsäure, Trimellitsäure, Pyromellitsäure.

Als Metalle seien genannt: Li, Na, K, Mg, Ca, Sr, Ba, Zn, Al, La, Ce und Seltenerdmetalle. Oft verwendet man sogenannte synergistische Mischungen wie Barium/Zink-, Magnesium/Zink-, Kalzium/Zink- oder Kalzium/Magnesium/Zink-Stabilisatoren. Die Metallseifen können einzeln oder in Mischungen eingesetzt werden. Eine Übersicht über gebräuchliche Metallseifen findet sich in Ullmanns Enzyklopedia of Industrial Chemistry, 5th Ed., Vol. A16 (1985), S. 361 ff.).

Bevorzugt sind Magnesium-, Kalzium- und Zinkseifen. Ganz besonders bevorzugt ist Magnesium- und Kalziumlaurat bzw. -stearat sowie Zinklaurat und Zinkstearat. oder tetravalenten Karbonsäuren, wie Hemimellithsäure, Trimellithsäure, Pyromellithsäure, Zitronensäure sowie ferner sog. überbasische (overbased) Zinkkarboxylate oder Zinklaurylmerkaptid, Zinkthioglykolat, Zinkthiosalizylat, Zink-bis-i-oktylthioglykolat, Zinkmerkaptopropionat, Zinkthiolactat, Zinkthiomalat, Zink-bisoktylmerkaptopropionat, Zink-bis-isooktylthiolaktat und Zink-bis-laurylthiomalat.

Bei den Zinkenolaten handelt es sich bevorzugt um Enolate des Azetyl(azetyl) azetons, des Benzoyl(azetyl)azetons, des Dibenzoylmethans sowie um Enolate der (Azetyl-)Azetessig- und Benzoyl(azet)essigesters sowie der Dehydrazetsäure. Ausserdem können auch anorganische Zinkverbindungen wie Zinkoxid, Zinkhydroxid, Zinkkarbonat, basisches Zinkkarbonat oder Zinksulfid zum Einsatz kommen.

Bevorzugt sind neutrale oder basische Zinkkarboxylate einer Karbonsäure mit 1 bis 22 C-Atomen (Zinkseifen), wie beispielsweise Benzoate oder Alkanoate, bevorzugt C₈-Alkanoate, Stearat, Oleat, Laurat, Palmitat, Behenat, Versatat, Hydroxystearate und - oleate, Dihydroxystearate, p-tert-Butylbenzoat, oder (Iso)oktanoat. Besonders bevorzugt sind Stearat, Oleat, Versatat, Benzoat, Ethylbenzoat und Diethylbenzoat sowie Methylbenzoat und Dimethylbenzoat.
Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden.

Weitere Beispiele für Metallstabilisatoren sind Bariumdi(nonylphenolat), Bariumdi(nonyl-o-kresolat), Kalziumlaurat, Magnesiumlaurat Bariumlaurat, Kalziumrizinoleat, Magnesiumrizinoleat, Bariumrizinoleat, Kalziummyristat, Magnesiummyristat, Bariummyristat, Bariumbenzoat, Bariumoxalat, Bariummalonat, Bariummaleat, Bariumtartrat, Barium-p-tert-butylbenzoat, Bariumsuccinat, Bariumglutarat, Bariumadipat, Bariumpimelat, Bariumsuberat, Bariumazelat und Bariumsebazat, Zinklaurat, Zinkoxalat, Zinkmalonat, Zinkmaleat, Zinktartrat, Zinkbenzoat, Zink-p-tert-butylbenzoat, Zinksuccinat, Zinkadipat, Zinkmalat und Zinkstearat. Weiter können Gemische der obigen Substanzen und / oder anderer bekannter Metallsalz-Stabilisatoren verwendet werden. Beispielsweise erwiesen sich ein 99:1-Gemisch (bezogen auf das Gewicht) von Kalzium- oder Bariumbenzoat und Zinklaurat sowie ein 6:1-Gemisch (bezogen auf das Gewicht) von Kalzium- oder Bariumstearat und Zinklaurat als nützlich.

### Organische Stabilisatoren (Uracile, Enaminonester und Harnstoffe)

Hierbei sind als, dass die Komponente (C) stickstofflialtige organische Verbindungen bevorzugt, wie subst. Cyanoacetyl-harnstoffe, subst. 6-Aminouracile, subst. Mono- oder Poly-1,4-Dihydropyridine und 3-Aminocrotonsäureester.

Diese Substanzklassen sind näher beschrieben in EP-A 0768 336, EP-A 1 510 545, EP-A 0 967 209, EP-A 0 967 208, EP-A 0 962 491 und EP-A 1 044 968.
Besonders bevorzugt als Komponenten (C) sind folgende Verbindungen:
1,3-Dimethyl-cyanacetylharnstoff
1-[C₃-C₂₂-Alkyl]- oder 1-Benzyl-6-aminouracil
Bis-1,3-C₁-C₂₂-Alkyl- oder 1,3-Dibenzyl-6-aminouracil
6-[2-Hydroxyäthylamino]-, 6-[2(3,4)-Hydroxyanilino]- oder
6-[2(3,4)-Meth(Eth)oxyanilino]-1,3-dimethyluracil
5,5'-[C₄-C₁₈-Alkyliden]-bis-1,3-dimethyl-6-aminouracil
1-Methyl(Phenyl, Benzyl)-3-[2-Hydroxybutyl]-6-aminouracil oder
1-Methyl(Phenyl, Benzyl)-3-[2-Hydroxy-2-allyloxyethyl]-6-aminouracil
2,6-Dimethyl-3,5-bis-carboxylauryl-1,4-dihydropyridin
1,4-Butandiyl-bis-3-aminocrotonat oder
2,2'-Thio-bis-ethandiyl-3-aminocrotonat.
Ganz besonders bevorzugt als Komponente (C) sind:
1,3-Dimethyl-6-aminouracil, 1,3-Dibenzyl-6-aminouracil,
1,3-Dimethyl-6-[2-hydroxyanilino]-uracil ,
5,5'-Pentyliden-bis -1,3-dimethyl 6-aminouracil,
5,5'-Hexyliden-bis -1,3-dimethyl 6-aminouracil,
5,5'-Heptyliden-bis 1,3-dimethyl -6-aminouracil,
5,5'-Octyliden-bis -1,3-dimethyl 6-aminouracil,
5,5'-Undecyliden-bis -1,3-dimethyl 6-aminouracil oder
5,5'-Dodecyliden-bis-1,3-dimethyl 6-aminouracil,
1-Methyl-3-[2-Hydroxybutyl]-6-aminouracil oder
1-Benzyl-3-[2-Hydroxybutyl]-6-aminouracil,
2,6-Dimethyl-3,5-bis-carboxylauryl-1,4-Dihydropyridin und
1,4-Butandiyl-bis-aminocrotonat oder
2,2'-Thiodiethanol-diyl-bis-aminocrotonat.

Der Konzentrationsbereich für die Thermostabilisatoren liegt bei 0,05 bis 5 Gew.-Teilen, bevorzugt 0,3 bis 3 Gew.-Teilen der Verbindung bezogen auf 100 Gew.-Teile chlorhaltiges Polymer.

Gegebenenfalls kann der erfindungsgemäße Thermostabilisator noch weitere Zusatzstoffe aufweisen, wie:
- Glycidylverbindungen und epoxidierte Fettsäureester
- Catena-µ-2,2',2"-nitrilotrisethanol-perchlorato (-triflato)-Natrium- oder Lithium-Innerkomplexe bzw. Lithium- oder Natriumperchlorate (-triflate) in gelöster bzw. geträgerter Form
- Zeolithe, Dawsonite und Schichtgitterverbindungen
- Erdalkaliseifen und Magnesiumoxid bzw. -hydroxid
- Polyole und Zuckeralkohole bzw. Tris-hydroxyalkyl-isocyanurate
- Phosphorigsäureester (Phosphite)
- Sterisch gehinderte Amine (HALS) und Aminoalkohole
- ß-Diketone und ß-Ketoester
- Antioxidantien
- UV-Absorber und Lichtschutzmittel
- Optische Aufheller
- Antistatika
- Biozide
- Pigmente
- Füllstoffe
- Treibmittel
- Gleitmittel
- Weichmacher
- Weitere Flammschutzmittel und Rauchverminderer.

Ein weiterer Gegenstand der vorliegenden Erfindung ist daher ein erfindungsgemäßes Polymer, das weiterein eine oder mehrere dieser Verbindungen aufweist.

Bevorzugt enthält der Thermostabilisator zusätzlich mindestens ein Antioxidans und/oder einen Alkohol ausgewählt aus Polyolen, Zuckeralkoholen und Tris-hydroxyalkylisocyanuraten bzw. Aminoalkoholen.

### Glycidylverbindungen und epoxidierte Fettsäurenester

Beispiele für die Substanzklasse der Glycidylverbindungen (C-2) sind Verbindungen mit mindestens einer Glycidylgruppe.

Beispiele für Glycidylverbindungen sind Verbindungen mit der Glycidylgruppe: 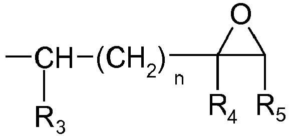 wobei diese direkt an Kohlenstoff, Sauerstoff-, Stickstoff- oder Schwefelatome gebunden ist, und worin entweder R₃ und R₅ beide Wasserstoff sind, R₄ Wasserstoff oder Methyl und n = 0 ist, oder worin R₃ und R₅ zusammen -CH₂-CH₂- oder -CH₂-CH₂-CH₂- bedeuten, R₄ dann Wasserstoff und n = 0 oder 1 ist.
I) Glycidyl- und β-Methylglycidylester erhältlich durch Umsetzung einer Verbindung mit mindestens einer Karboxylgruppe im Molekül und Epichlorhydrin bzw. Glyzerindichlorhydrin bzw. β-Methyl-epichlorhydrin. Die Umsetzung erfolgt zweckmäßig in Gegenwart von Basen.
   Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Kapron-, Kapryl-, Pelargonsäure, Laurin-, Myristin-, Palmitin- und Stearinsäure.
   Es können aber auch zykloaliphatische Karbonsäuren eingesetzt werden, wie beispielsweise Zyklohexankarbonsäure, Tetrahydrophthalsäure, 4-Methyltetrahydrophthalsäure, Hexahydrophthalsäure oder 4-Methylhexahydrophthalsäure.
   Weiterhin können aromatische Carbonsäuren Verwendung finden, wie beispielsweise Benzoesäure, Phthalsäure, Isophthalsäure, Trimellithsäure oder Pyromellithsäure. Ebenfalls können auch carboxylterminierte Addukte, z. B. von Trimellithsäure und Polyolen, wie beispielsweise Glyzerin oder 2,2-Bis-(4-hydroxyzyklohexyl)-propan verwendet werden.
   Weitere im Rahmen dieser Erfindung verwendbare Epoxidverbindungen finden sich in EP 0 506 617.
II) Glycidyl- oder (β-Methylglycidyl)- alkanolether erhältlich durch Umsetzung einer Verbindung mit mindestens einer freien alkoholischen Hydroxygruppe und einem geeignet substituierten Epichlorhydrin unter alkalischen Bedingungen, oder in Anwesenheit eines sauren Katalysators und anschließender Alkalibehandlung.
   Ether dieses Typs leiten sich beispielsweise ab von azyklischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glyzerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooktanol, 2-Ethylhexanol, Isodekanol sowie C₇-C₉-Alkanol- und C₉-C₁₁-Alkanolgemischen.
   Sie leiten sich aber auch beispielsweise ab von zykloaliphatischen Alkoholen wie 1,3-oder 1,4-Dihydroxyzyklohexan, Bis-(4-hydroxyzyklohexyl)-methan, 2,2-Bis-(4-hydroxyzyklohexyl)-propan oder 1,1-Bis-(hydroxymethyl)-zyklohex-3-en oder sie besitzen aromatische Kerne wie N,N-Bis-(2-hydroxyethyl)-anilin oder p,p'-Bis-(2-hydroxyethylamino)-diphenylmethan.
III)(N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N-(2,3-epoxypropyl)-phthalimid.
   Zu den (N-Glycidyl)-Verbindungen zählen aber auch N,N'-Di-, N,N',N"-Tri- und N,N',N",N"'-Tetraglycidylderivate von Zykloalkylenharnstoffen, wie
   Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.
IV)S-Glycidyl-Verbindungen, wie beispielsweise Di-S-glycidylderivate, die sich von Dithiolen, wie beispielsweise Ethan-1,2-dithiol oder Bis-(4-merkaptomethylphenyl)-ether ableiten.
V) Epoxidverbindungen mit einem Rest der obigen Formel, worin R1 und R3 zusammen - CH2-CH2- bedeuten und n 0 ist, sind Bis-(2,3-epoxyzyklopentyl)-ether, 2,3-Epoxyzyklopentylglycidylether oder 1,2-Bis-(2,3-epoxyzyklopentyloxy)-ethan. Ein Epoxidharz mit einem Rest der obigen Formel, worin R1 und R3 zusammen -CH2-CH2- sind und n 1 bedeutet, ist beispielsweise 3,4-Epoxy-6-methyl-zyklohexankarbonsäure-(3',4'-epoxy-6'-methyl-zyklohexyl)-methylester.
   Geeignete endständige Epoxide sind beispielsweise:
   a) flüssige Glycidylether von Alkoholen wie Shell Glycidylether® 162, Araldit®DY 0390, Araldit®DY 0391;
   b) flüssige und feste Glycidylester von Karbonsäuren wie Shell Cardura® E Terephthalsäureester, Trimellithsäureester sowie deren Mischungen Araldit®PY 284
      und Araldit® P811;
   c) feste heterozyklische Epoxidharze (Triglycidylisocyanurat) wie Araldit® PT 810;
   d) flüssige zykloaliphatische Epoxidharze wie Araldit®CY 179;
   e) Tetraglycidyl-4-4'-methylenbenzamin oder N,N,N',N'-Tetraglycidyldiamino phenylmethan wie Araldit®MY 720, Araldit®MY 721.

Vorwiegend werden Diglycidylverbindungen auf Ether- oder Esterbasis bevorzugt. Weiterhin bevorzugt sind feste Glycidylester der Terephthal- und Trimellitsäure.

Ganz besonders bevorzugt sind 1,4-Butandiol-diglycidylether und 1,4-Bishydroxymethylcyclohexan-diglycidylether.

Gegebenenfalls kann auch ein Gemisch verschiedener Epoxidverbindungen eingesetzt werden. Der Konzentrationsbereich liegt bei 0,01 bis 5,0 Gew.-Teile, bevorzugt bei 0,5 bis 3,0 Gew.-Teile bezogen auf 100 Gew.-Teile PVC.

Beispiele für epoxidierte Fettsäureester sind epoxidiertes Sojaöl, epoxidiertes Olivenöl, epoxidiertes Leinöl, epoxidiertes Rizinusöl, epoxidiertes Erdnussöl, epoxidiertes Maisöl, und epoxidiertes Baumwollsamenöl. Der Konzentrationsbereich liegt bei 1 bis 30,0 Gew.-Teile, bevorzugt bei 1,0 bis 25,0 Gew.-Teile, besonders bevorzugt bei 2,0 bis 20,0 und ganz besonders bevorzugt bei 3,0 bis 15,0 Gew.-Teile bezogen auf 100 Gew.-Teile PVC.

### Catena-µ- 2,2',2"-nitrilotrisethanol-perchlorato(triflato)-Natrium oder -Lithium

Diese vier Innerkomplexe sind Koordinationspolymere mit folgender Monomereinheit: 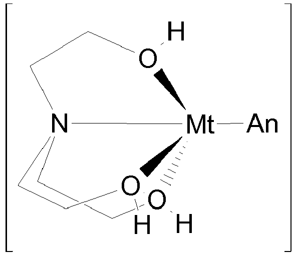 wobei
Mt = Li oder Na
An = OClO₃ oder OS(O₂)CF₃

Bevorzugt ist An = OClO₃, wobei Mt = Na (TEAP) besonders bevorzugt ist. Ihre Verwendung als Stabilisatoren ist beschrieben in WO-A 2006/136191. Ganz besonders bevorzugt ist eine Phlegmatisierung von konzentrierten wässrigen TEAP- Lösungen auf PVC Dieser Herstellprozess ist in der deutschen Patentanmeldung DE-A 10 2007 050 428 beschrieben.

### Natrium (Lithium)-perchlorat(triflat) in gelösten oder geträgerter Form

Diese Lithium- oder Natriumsalze können als Lösungen zum Einsatz kommen, wobei folgende Lösungsmittel bevorzugt sind: Wasser, Glycole, Glycolether, (Poly)Glycerine und Polyglycolether.

Besonders bevorzugt sind jedoch geträgerte Formulierungen der Salze, wobei das Salz in gelöster Form (meist wässrig) auf einem festen Träger in homogener Verteilung ab(ad)sorbiert wird. Als Trägersubstanzen sind zu nennen:
Siliciumdioxid (Kieselgur), Calciumsilikat, Calciumcarbonat, Calciumoxid, Calciumhydroxid, Na-Zeolith A, Hydrotalcit und calcinierter Dolomit, wobei letzterer bevorzugt ist.

Diese Natrium- oder Lithiumverbindungen zeigen in PVC, bevorzugt in zinkfreien Rezepturen, einen Booster-Effekt. Sie werden vorzugsweise im Substrat zweckmäßig von 0,001 bis 5 phr, bevorzugt von 0,01 bis 3 phr und ganz besonders bevorzugt von 0,01 bis 2 phr eingesetzt.

### Zeolithe

Sie können durch die Formel M_{x/n}[(AlO₂)ₓ(SiO₂)_{y}] * w H₂O beschrieben werden, worin n die Ladung des Kations M; M ein Element der ersten oder zweiten Hauptgruppe, wie Li, Na, K oder NH₄ sowie Mg, Ca, Sr oder Ba; y:x eine Zahl von 0,8 bis 15, bevorzugt von 0,8 bis 1,2; und w eine Zahl von 0 bis 300, bevorzugt von 0,5 bis 30, ist.

### Beispiele für Zeolithe sind Natriumalumosilikate der Formeln

Na₁₂Al₁₂Si₁₂O₄₈ * 27 H₂O [Zeolith A], Na₆Al₆Si₆O₂₄ * 2 NaX * 7,5 H₂O, X=OH, Halogen, ClO₄ [Sodalith]; Na₆Al₆Si₃₀O₇₂ * 24 H₂O; Na₈Al₈Si₄₀O₉₆ * 24 H₂O; Na₁₆Al₆Si₂₄O₈₀ * 16 H₂O; Na₁₆Al₁₆Si₃₂O₉₆ * 16 H₂O; Na₅₆Al₅₆Si₁₃₆O₃₈₄ * 250 H₂O [Zeolith Y], Na₈₆Al₈₆Si₁₀₆0₃₈₄ * 264 H₂O [Zeolith X]; Na₂O, Al₂O₃, (2-5)SiO₂, (3,5-10)H₂O [Zeolith P]; Na₂O, Al₂O₃, 2SiO₂, * (3,5-10) H₂O (Zeolith MAP); oder die durch teilweisen bzw. vollständigen Austausch der Na-Atome durch Li-, K-, Mg-, Ca-, Sr- oder Zn-Atome darstellbaren Zeolithe wie (Na,K)₁₀Al₁₀Si₂₂O₆₄ * 20 H₂O; Ca_{4,5}Na₃[(AlO₂)₁₂(SiO₂)₁₂] * 30 H₂O; K₉Na₃[(AlO₂)₁₂(SiO₂)₁₂] * 27 H₂O. Ganz besonders bevorzugt sind Na-Zeolith A und Na-Zeolith MAP (siehe auch PS - US 6,531,533). Ebenso bevorzugt sind Zeolithe mit äußerst geringer Teilchengröße, insbesondere vom Na-A- und Na-P-Typ, wie sie auch in US-A 6,096,820 beschrieben sind.

### Dawsonite (Alkalialumocarbonate)

Diese werden durch die allgemeine Formel
M[Al(OH)₂CO₃] (M = Na, K)
beschrieben. Die Herstellung von Na-Dawsonit (DASC bzw. SAC) und K-Dawsonite (DAPC bzw. PAC) ist publiziert in US-A 3,501,264 und US-A 4,221,771 sowie in EP-A 0 394 670. Die Synthese kann hydrothermal oder nichthydrothermal erfolgen. Die Produkte können kristallin oder amorph vorliegen. Einbezogen in die Substanzklasse sind auch Natrium-Magnesium-Alumocarbonate (SMAC); deren Herstellung ist beschrieben US 455,055,284.

Calcium-Aluminium-Hydroxo-Hydrogenphosphite und/oder Zeolithe und/oder Dawsonite und/oder Schichtgitterverbindungen können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer, angewandt werden.

### Schichtgitterverbindungen

Zu ihnen gehören Magnesium-Aluminium-Hydroxocarbonate (Hydrotalcite), Calcium-Aluminium-Hydroxocarbonat (CAHC), Titania-Hydrotalcite (Al/Mg/Ti/Carbonat-haltig), Lithium-Hydrotalcite (Li/Al/Carbonat- oder Li/Mg/Al/Carbonat-basiert) und Calcium-Aluminium-Hydroxo-Hydrogenphosphite, wie beschrieben in PS-DE 44.25266 A1 (Fa. Metallgesellschaft), PS -EP 0.549.340 A1 (Fa. Mizusawa Ind. Chem.) und PS - JP 0.761.756 A1 (Fuji Chem. Ind.). Sie können durch die folgende allgemeine Formel:

M2⁺₁₋ₓM³⁺ₓ(OH)₂(Aⁿ)_{x/b} * d H₂O

beschrieben werden, wobei
M²⁺= als Kation eines oder mehrere der Metalle aus der Gruppe Mg, Ca, Sr,
Zn oder Sn ist, M³⁺ = als Kation Al oder B ist, Aⁿ ein Anion mit der Valenz -n darstellt,
b = n eine Zahl von 1-2 ist, 0 < x < 0,5 ist, d eine Zahl von 0-20 ist. Bevorzugt sind Verbindungen mit
Aⁿ = OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ oder HPO₄²⁻.

### Titania-Hydrotalcite

Titanhaltige Hydrotalcite sind in PS - WO 95/21127 beschrieben. Verbindungen dieser Art mit der allgemeinen Formel AlₐMg_{b}Ti_{c}(OH)_{d}(CO₃)ₑ * m H₂O, wobei a:b = 1:1 bis 1:10; 2≤b≤10; 0<c<5; 0≤m≤5 betragen und d und e so gewählt sind dass ein basisches, ladungsfreies Molekül entsteht, können ebenfalls verwendet werden.

### Lithium-Hydrotalcite

Lithium-Aluminium-Schichtgitterverbindungen haben die allgemeine Formel:

LiₐM^{II}_{(b-2a})Al(₂₊ₐ)OH(_{4+2b})(Aⁿ⁻)_{(2/n)} * m H₂O

worin
M^{II} Mg, Ca oder Zn und Aⁿ ein ausgewähltes Anion der Wertigkeit n oder ein Gemisch von Anionen ist und die Indizes im Bereich von
0 < a < (b-2)/2,
1<b<6 und
m = 0 bis 30
liegen mit der Einschränkung, dass (b-2a) >2 ist oder die allgemeine Formel:

[Al₂(Li(₁₋ₓ)M^{II}ₓ)(OH)₆]ₙ(Aⁿ⁻)₍₁₊ₓ₎ * m H₂O

worin
M^{II}, A, m und n die obige Bedeutung haben und
x die Bedingung erfüllt 0,01 ≤ x < 1

Die Herstellung der genannten Schichtgitterverbindungen ist dadurch gekennzeichnet, dass man im wässrigen Medium Lithiumhydroxid, -oxid und/oder dessen in Hydroxid umwandelbare Verbindungen, Metall-(II)-hydroxide, -oxide und/oder deren in Hydroxide umwandelbare Verbindungen der genannten Metalle und Aluminiumhydroxide und/oder deren in Hydroxide umwandelbare Verbindungen sowie Säuren und/oder deren Salze bzw. Gemische davon bei einem pH-Wert von 8 bis 10 und bei Temperaturen von 20 bis 250°C miteinander umsetzt und das erhaltene feste Reaktionsprodukt abtrennt.

Die Reaktionszeit beträgt vorzugsweise 0,5 bis 40 Stunden, insbesondere 3 bis 15 Stunden. Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit Wasser und Trocknen des gewaschenen Rückstands bei Temperaturen von beispielsweise 60 bis 150 °C, vorzugsweise bei 90 bis 120 °C.

Für die Umsetzung mit Aluminium kann sowohl feinteiliges, aktives Metall-(III)-hydroxid in Kombination mit Natriumhydroxid, als auch ein NaAlO₂ eingesetzt werden. Lithium bzw. eine der genannten Metall-(II)-verbindungen kann in Form von feinteiligem Lithiumoxid oder-hydroxid oder Mischungen daraus bzw. von feinteiligem Metall-(II)-oxid oder-hydroxid oder Mischungen daraus verwendet werden. Die entsprechenden Säureanionen können in unterschiedlich konzentrierter Form z.B. direkt als Säure oder aber als Salz eingesetzt werden.

Die Umsetzungstemperaturen liegen vorzugsweise zwischen etwa 20 und 250°C, weiter im Besonderen zwischen etwa 60 und 180 °C. Katalysatoren oder Beschleuniger sind nicht erforderlich. Bei den Substanzen kann als Kristallwasser ganz oder teilweise durch Behandlung entfernt werden. Bei ihrer Anwendung als Stabilisatoren spalten die getrockneten Schichtgitterverbindungen bei den für PVC üblichen Verarbeitungstemperaturen von 160 bis 220 °C kein Wasser oder ein anderes Gas ab, so dass in den Formteilen keine störende Blasenbildung auftritt.

Das Anionen Aⁿ in der obigen allgemeinen Formel kann Sulfat, Sulfit, Sulfid, Thiosulfat, Peroxosulfat, Peroxodisulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxid, Hydroxylamin, Hydroazid, Acetylacetonat, Phenolat, Pseudohalogenide, Halogenite, Halogenate, Perhalogenate, I₃⁻, Permanganat, Dianionen von Dicarbonsäuren wie Phthalat, Oxalat, Maleat oder Fumarat, Bisphenolate, Phosphat, Pyrophosphat, Phosphit, Pyrophosphit Trianionen von Tricarbonsäuren wie Citrat, Trisphenolate u.v.m., sowie Gemische daraus sein. Unter diesen sind Hydroxid, Carbonat, Phosphit und Maleat bevorzugt. Zur Verbesserung der Dispergierbarkeit der Substanzen in halogenhaltigen thermoplastischen Polymermassen können diesselben mit einer höheren Fettsäure, z.B. Stearinsäure, einem anionischen oberflächenaktiven Agens, einem Silankuppler, einem Titanat-Kuppler oder einem Glycerinfettsäureester oberflächenbehandelt sein.

### Erdalkaliseifen

Bevorzugt sind fettsaure Calcium- und Magnesiumcarboxylate basierend auf C₁₀ bis C₂₀-Carbonsäuren oder Neodecansäure. Besonders bevorzugt ist Calcium- bzw. Magnesiumstearat oder -palmitat und -laurat. Ganz besonders bevorzugt sind Calciumneodecanoat und -oleat.

### Polyole und Zuckeralkohole

Als Verbindungen dieses Typs kommen beispielsweise in Betracht: Pentaerythrit, Dipentaerythrit, Tripentaerythrit, Trimethylolethan, Bistrimethylolpropan, Inosit, Polyvinylalkohol, Bistrimethylolethan, Trimethylolpropan, Sorbit, Maltit, Isomaltit, Lycasin, Mannit, Laktose, Leukrose, Tris-(hydroxyethyl)isocyanurat (THEIC), Palatinit, Tetra-methylzyklohexanol, Tetramethylolzyklopentanol, Tetramethylolpyranol, Glyzerin, Di-glyzerin, Polyglyzerin, Thiodiglyzerin oder 1-0-∝-D-Glycopyranosyl-D-mannit-dihydrat. Bevorzugt sind Disaccharidalkohole. Verwendung finden auch Polyolsirupe wie Sorbit-, Mannit- und Maltitsirup. Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewendet werden. Bevorzugt ist Tris-(hydroxyethyl)isocyanurat.

### Phosphorigsäureester (Phosphite)

Beispiele hierfür sind Trioktyl-, Tridecyl-, Tri-isodecyl-, Tri-isononyl-, Tridodecyl-, Tritridecyl-, Tripentadecyl-, Trioleyl, Tristearyl-, Trilauryl-, Tris-2,4-t-butyl-phenyl- oder Trizyklohexylphosphit. Ein weiteres geeignetes Phosphit ist Dodecyl-bis-2,4-di-t-butyl-phenylphosphit. Weiterhin können auch Phosphite verschiedener Di- bzw. Polyole vorteilhaft verwandt werden, z.B. Tetraphenyldipropylenglykoldiphosphit, Poly(dipropylen-glykol)phenylphosphit, Tetra-isodecyl-dipropylenglykoldiphosphit, Tris-dipropylenglykol-phosphit, Tetramethylolzyklohexanol-decyldiphosphit, Tetramethylolzyklohexanolbutoxy-ethoxy-ethyldiphosphit, Tetramethylolzyklohexanol-nonylphenyl-diphosphit, Bis-nonyl-phenyl-di-trimethylolpropandiphosphit, Bis-2-butoxyethyl-di-trimethylolpropandiphosphit, Trishydroxyethylisocyanurathexadecyltriphosphit, Didecylpentaerythritdiphosphit, Distearylpentaerythritdiphosphit, Bis-2,4-di-t-butylphenylpentaerythritdiphosphit, sowie Gemische dieser Phosphite. Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewendet werden.

Ein erfindungsgemäßer Thermostabilisator (C) kann die beschriebenen Phosphitverbindungen in einer Menge von bis zu etwa 30 Gew.-%, insbesondere bis etwa 10 Gew.-%, enthalten.

### Sterisch gehinderte Amine (HALS und NOR-HALS) und Aminoalkohole

Bei den sterisch gehinderten Aminen handelt es sich allgemein um Verbindungen enthaltend die Gruppe 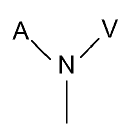 worin A und V unabhängig voneinander C₁₋₈-Alkyl-, C₃₋₈Alkenyl-, C₅₋₈-Zykloalkyl-, oder C₇₋₉-Phenylalkyl- sind, oder zusammen gegebenenfalls durch O, NH oder CH₃-N unterbrochenes C₂₋₅-Alkylen bilden, oder um ein zyklisches sterisch gehindertes Amin, insbesondere eine Verbindung aus der Reihe der Alkyl- bzw. Polyalkylpiperidine, vor allem der Tetramethylpiperidine enthaltend die Gruppe

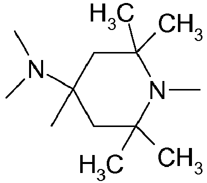

Beispiele für solche Polyalkylpiperidinverbindungen sind folgende (bei den oligomeren oder polymeren Verbindungen liegen n und r im Bereich 2-200, vorzugsweise im Bereich 2-10, insbesondere 3-7). Eine umfangreiche Liste solcher Verbindungen befindet sich in EP 0 796 888 B1.

Im Rahmen einer besonders bevorzugten Ausführungsform der vorliegenden Erfindung werden als Aminoalkohole heterozyklische Verbindungen eingesetzt. Beispiele für diese sind: EO-, PO- und BO-Umsetzungsprodukte von Ethylen- und Propylenharnstoffen, Parabansäure, Hydantoinen, Barbitursäuren, Glykolurilen und Isozyanursäuren. Besonders bevorzugt ist im Rahmen der vorliegenden Erfindung der Einsatz von Tris(hydroxyethyl)isocyanurat (THEIC) oder Tris(hydroxypropyl)isocyanurat als Bestandteil des erfindungsgemäßen Thermostabilisators (C).

Der Gehalt eines erfindungsgemäßen Thermostabilisators (C) an THEIC, beträgt beispielsweise etwa 0,01 bis etwa 10 Gew.-%.

### β-Diketone und β-Ketoester

Verwendbare 1,3-Dikarbonylverbindungen sind lineare oder zyklische Dikarbonylverbindungen. Bevorzugt werden Dikarbonylverbindungen der Formel R'₁CO CHR₂ -COR'₃ verwendet, worin R'₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Zykloalkyl, durch C₁-C₄-alkylsubstituiertes C₅-C₁₂-Zykloalkyl oder eine Gruppe -R'₅-S-R'₆ oder -R'₅-O-R'₆ bedeutet; R'₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Gruppe -CO-R'₄ bedeutet; R'₃ eine der für R'₁ gegebenen Bedeutungen hat oder C₁-C₁₈-Alkoxy bedeutet, R'₄ C₁-C₄-Alkyl oder Phenyl bedeutet; R'₅ C₁-C₁₀-Alkylen bedeutet und R'₆ C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone EP-A 0,346,279 A1 und die Oxa- und Thia-diketone in EP-A 0,307,358 A1 ebenso wie die auf Isozyanursäure basierenden Ketoester in US 4,339,383.

R'₁ und R'₃ als Alkyl können insbesondere C₁-C₁₈-Alkyl sein, z. B. Methyl, Ethyl, n-Propyl, Isopropyl, n-Butyl, tert Butyl, Pentyl, Hexyl, Heptyl, Oktyl, Decyl, Dodecyl oder Oktadecyl.

R'₁ und R'₃ als Hydroxyalkyl stellen insbesondere eine Gruppe -(CH₂)ₙ-OH dar, worin n 5, 6 oder 7 ist.

R'₁ und R'₂ als Alkenyl können beispielsweise Vinyl, Allyl, Methallyl, 1-Butenyl, 1-Hexenyl oder Oleyl bedeuten, vorzugsweise Allyl.

R'₁ und R'₃ als durch OH, Alkyl, Alkoxy oder Halogen substituiertes Phenyl können beispielsweise Tolyl, Xylyl, tert-Butylphenyl, Methoxyphenyl, Ethoxyphenyl, Hydroxyphenyl, Chlorphenyl oder Dichlorphenyl sein.

R'₁ und R'₃ als Phenylalkyl sind insbesondere Benzyl. R'₂ und R'₃ als Zykloalkyl oder Alkylzykloalkyl sind insbesondere Zyklohexyl oder Methylzyklohexyl.

R'₂ als Alkyl kann insbesondere C₁-C₄-Alkyl sein. R'₂ als C₂-C₁₂-Alkenyl kann insbesondere Allyl sein. R'₂ als Alkylphenyl kann insbesondere Tolyl sein. R'₂ als Phenylalkyl kann insbesondere Benzyl sein. Vorzugsweise ist R'₂ Wasserstoff. R'₃ als Alkoxy kann z.B. Methoxy, Ethoxy, Butoxy, Hexyloxy, Oktyloxy, Dodecyloxy, Tridecyloxy, Tetradecyloxy oder Oktadecyloxy sein. R'₅ als C₁-C₁₀-Alkylen ist insbesondere C₂-C₄-Alkylen. R'₆ als Alkyl ist insbesondere C₄-C₁₂-Alkyl, z. B. Butyl, Hexyl, Oktyl, Decyl oder Dodecyl.

R'₆ als Alkylphenyl ist insbesondere Tolyl. R'₆ als Phenylalkyl ist insbesondere Benzyl.

Beispiele für 1,3-Dikarbonylverbindungen der vorstehenden allgemeinen Formel sowie deren Alkali-, Erdalkali- und Zinkchelate sind Acetylazeton, Butanoylazeton, Heptanoylazeton, Stearoylazeton, Palmitoylazeton, Lauroylazeton, 7-tert.-Nonylthioheptandion-2,4, Benzoylaceton, Dibenzoylmethan, Lauroylbenzoylmethan, Palmitoylbenzoylmethan, Stearoylbenzoylmethan, Isooktylbenzoylmethan, 5-Hydroxykapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-acetylnonan, Benzoyl-acetylphenylmethan, Stearoyl-4-methoxybenzoylmethan, Bis(4-tert-butylbenzoyl)methan, Benzoylformylmethan, Benzoyl-phenylacetylmethan, Biszyklohexanoyl-methan, Di-pivaloyl-methan, 2-Acetyl-zyklo-pentanon, 2-Benzoylzyklopentanon, Diazetessigsäuremethyl-, -ethyl- und -allylester, Benzoyl-, Propionyl- und Butyryl-azetessigsäuremethyl- und -ethylester, Triacetylmethan, Azetessigsäuremethyl-, -ethyl-, -hexyl-, -oktyl-, -dodecyl- oder -oktadecylester, Benzoylessigsäuremethyl-, -ethyl-, -butyl-, -2-ethylhexyl-, -dodecyl- oder -oktadecylester, sowie Propionyl- und Butyrylessigsäure-C₁-C₁₈-alkylester. Stearoylessigsäureethyl-, -propyl-, - butyl-, -hexyl- oder -oktylester sowie mehrkernige ß-Ketoester wie in PS - EP-A 0 433 230 beschrieben und Dehydrazetsäure sowie deren Zink-, Magnesium- oder Alkalisalze. Bevorzugt sind Ca-, Mg- und Zn-Salze des Acetylazetons und der Dehydrazetsäure.

Besonders bevorzugt sind 1,3-Diketoverbindungen der obigen Formel, worin R'₁ C₁-C₁₈-Alkyl, Phenyl, durch OH, Methyl oder Methoxy substituiertes Phenyl, C₇-C₁₀-Phenylalkyl oder Zyklohexyl ist, R'₂ Wasserstoff ist und R'₃ eine der für R'₁ gegebenen Bedeutungen hat. Ebenso gehören hierzu heterozyklische 2,4-Dione wie N-Phenyl-3-acetylpyrrolidin-2,4-dion. Weitere Vertreter diese Kategorie sind beschrieben in EP-A 0,734,414 A1. Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewendet werden.

### Antioxidantien

Dazu zählen sterisch gehinderte Phenole, wie alkylierte Monophenole, z. B. 2,6-Di-tert-butyl-4-methylphenol, Alkylthiomethylphenole, z.B. 2,4-Di-oktylthiomethyl-6-tert-butylphenol, alkylierte Hydrochinone, z. B. 2,6-Di-tert-butyl-4-methoxyphenol, hydroxylierte Thiodiphenylether, z. B. 2,2'-Thio-bis-(6-tert-butyl-4-methylphenol), Alkyliden-Bisphenole, z.B. 2,2'-Methylen-bis-(6-tert-butyl-4-methylphenol), Benzylverbindungen, z.B. 3,5,3',5'-Tetra-tert-butyl-4,4'-di-hydroxydibenzylether, hydroxybenzylierte Malonate, z.B. Dioktadecyl-2,2-bis-(3,5-di-tert-butyl-2-hydroxybenzyl)-malonat, Hydroxybenzyl-Aromaten, z.B. 1,3,5-Tris-(3,5-di-tert-butyl-4-hydroxybenzyl)-2,4,6-trimethylbenzol, Triazinverbindungen, z.B. 2,4-Bis-oktyl-merkapto-6-(3,5-di-tert-butyl-4-hydroxyanilino)1,3,5-triazin, Phosphonate und Phosphonite, z.B. Dimethyl-2,5-di-tert-butyl-4-hydroxybenzylphosphonat, Acylaminophenole, z.B. 4-Hydroxylaurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dizyklohexyl-4-hydroxyphenyl)-propionsäure, Ester der 3,5-Di-tert-butyl-4-hydroxy-phenylessigsäure mit ein- oder mehrwertigen Alkoholen, Amide der ß-(3,5-di-tert-butyl-4-hydroxyphenyl)-propionsäure, z.B. N,N'-Bis-(3,5-di-tert-butyl-4-hydroxyphenylpropionyl)-hexamethylendiamin, Vitamin E (Tocopherol) und Abkömmlinge sowie D,L-Ascorbinsäure. Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewendet werden.

### UV-Absorber und Lichtschutzmittel

Beispiele dafür sind 2-(2'-Hydroxyphenyl)-benztriazole, z.B. 2-(2'-Hydroxy-5'-methylphenyl)-benztriazol, 2-Hydroxybenzophenone, Ester von gegebenenfalls substituierten Benzoesäuren, z.B. 4-tert-Butyl-phenylsalizylat, Phenylsalizylat, Acrylate, Nickelverbindungen, Oxalsäurediamide, z.B. 4,4'-Di-oktyloxy-oxanilid, 2,2'-Di-oktyloxy-5,5'-di-tert-butyl-oxanilid, 2-(2-Hydroxyphenyl)-1,3,5-triazine, z.B. 2,4,6-Tris(2-hydroxy-4-oktyloxyphenyl)-1,3,5-triazin, 2-(2-Hydroxy-4-oktyloxyphenyl)-4,6-bis-(2,4-dimethylphenyl)-1,3,5-triazin, sterisch gehinderte Amine auf Basis von Tetramethylpiperidin bzw. Tetramethylpiperazinon oder Tetramethylmorpholinon, z.B. Bis(2,2,6,6-tetramethyl-piperidin-4-yl)-sebazat, Bis(2,2,6,6-tetramethyl-piperidin-4-yl)-succinat sowie Benzoxazinone wie 1,4-Bis-benzoxazinonyl-benzol.

### Optische Aufheller

Beispiele hierfür sind Bis-benzol(1,4)-oxazole, Phenylkumarine und Bis-styryl-biphenyle wie 4-Methyl-7-diethylaminokumarin, 3-Phenyl-7-(4-methyl-6-butoxybenzoxazol)-kumarin, 4,4'-Bis-(benzoxazol-2-yl)-stilben und 1,4-Bis(-benzoxazol-2-yl)-naphthalin. Bevorzugt sind Lösungen optischer Aufheller in einem Weichmacher, beispielsweise DINP.

### Antistatika

Antistatika werden eingeteilt in nichtionische (a), anionische (b), kationische (c) und amphotere (d) Klassen. Zu (a) gehören Fettsäureethoxylate, Fettsäureester, ethoxylierte Fettalkylamine, Fettsäurediethanolamide und ethoxylierte Phenole und Alkohole sowie Polyglykolmonofettsäureester. Zu (b) gehören Alkalifettalkansulfonate und Phosphorsäure-bis-fettalkoholester-alkalisalze. Zu (c) gehören quaternäre Fettalkylammoniumsalze und zu (d) gehören Fettalkylbetaine und Fettalkylimidazolinbetaine. Einzelne bevorzugte Verbindungen sind Laurinsäurediethanolamid, Myristyldiethanolamin, Na-oktadecyl-sulfonat und Na-bis-oktadecylphosphat.

### Biozide

Als Biozide sind zu benennen: Isothiazolin-3-on-Derivate, wie, 2-n-Octyl-4-isothiazolin-3-on (OIT) und 4,5-Dichloro-2-n-octyl-4-isothiazolin-3-on (DCOIT), Ag-Zn-Zeolith, N-Trichloromethylthio-4-cyclohexen-1,2-dicarboximid, 2,3,5,6-Tetrachloro-4-(methyl sulphonyl)pyridin, 10,10'-Oxybisphenoxarsine (OBPA), quaternäre Ammonium- und Phosphoniumsalze, 3-Iodo-2-propinyl-butylcarbamat(IPBC), Benzimidazol-2-carbaminsäuremethylester, 2,4,4'-Trichloro-2'-hydroxydiphenylether, Zink-bis-2-pyridinthiolat-N-oxid (Zinkpyrithion) und 1,2-Benzisothiazolin-3-on, N-Butyl-benzisothiazolin-3-on sowie 2-(4-Thiazolyl)-benzimidazol (Thiabendazol).

### Pigmente

Ebenfalls als Bestandteil des erfindungsgemäßen Thermostabilisators (C) geeignet sind Pigmente. Geeignete Stoffe sind dem Fachmann bekannt. Beispiele für anorganische Pigmente sind TiO₂, Pigmente auf Zirkonoxidbasis, BaSO₄, Zinkoxid (Zinkweiss) und Lithopone (Zinksulfid/Bariumsulfat), Ruß, Ruß-Titandioxid-Mischungen, Eisenoxidpigmente, Sb₂O₃, (Ti,Ba,Sb)O₂, Cr₂O₃, Spinelle wie Kobaltblau und Kobaltgrün, Cd(S,Se), Ultramarinblau. Organische Pigmente sind z.B. Azopigmente, Phthalozyaninpigmente, Chinacridonpigmente, Perylenpigmente, Diketopyrrolopyrrolpigmente und Anthrachinon-pigmente. Bevorzugt ist TiO₂ auch in mikronisierter Form. Eine Definition und weitere Beschreibungen finden sich im "Handbook of PVC Formulating", E. J.Wickson, John Wiley & Sons, New York, 1993.

### Füllstoffe

Als Füllstoffe sind zu benennen: Calciumcarbonat, Dolomit, Calciumsulfat, Talk, Kaolin, Glimmer, Feldspat, Nephelin, Syenit, Wollastonit, Bariumsulfat, Schwerspat, Aluminiumhydroxid, Magnesiumhydroxid, Ruß und Graphit.

### Treibmittel

Treibmittel sind z.B. organische Azo- und Hydrazoverbindungen, Tetrazole, Oxazine, Isatinsäureanhydrid, N-Methylisatinsäureanhydrid, sowie Soda und Natriumbikarbonat. Bevorzugt sind Azodikarbonamid und Natriumbikarbonat sowie deren Mischungen. Ganz besonders bevorzugt ist Isatinsäureanhydrid oder N-Methylisatinsäureanhydrid speziell in Weich-PVC oder PVC-Halbhart.

### Gleitmittel

Ein erfindungsgemäßer Thermostabilisator (C) kann weiterhin Gleitmittel enthalten. Als Gleitmittel kommen beispielsweise in Betracht: Montanwachse, Fettsäureester, PE- und PP-Wachse, Amidwachse, Chlorparaffine, Glyzerinester oder Erdalkaliseifen, ferner Fettketone sowie Kombinationen davon, wie in EP-A 0,259,783 A1 aufgeführt.

Eine erfindungsgemäße Verwendung des Thermostabilisators (C) kann die beschriebenen Gleitmittel in einer Menge von bis zu etwa 70 Gew.-%, insbesondere bis etwa 40 Gew.-%, enthalten.

### Weichmacher

Ebenfalls als Zusatzstoffe für den Thermostabilisator (C) gemäß der vorliegenden Erfindung geeignet sind organische Weichmacher. Als organische Weichmacher kommen beispielsweise solche aus den folgenden Gruppen in Betracht:
(i) Phthalsäureester wie bevorzugt Di-2-ethylhexyl-, Di-iso-nonyl- und Di-iso-decylphthalat, die auch unter den gebräuchlichen Abkürzungen DOP (Dioktylphthalat, Di-2-ethylhexyl-phthalat), DINP (Diisononylphthalat), DIDP (Diisodecylphthalat) bekannt sind
(ii) Ester aliphatischer Dikarbonsäuren, insbesondere Ester von Adipin-, Azelain- und Sebazinsäure, bevorzugt Di-2-ethylhexyladipat und Di-iso-oktyladipat
(iii) Trimellitsäureester, beispielsweise Tri-2-ethylhexyltrimellitat, Tri-iso-decyltrimellitat (Gemisch), Tri-iso-tridecyltrimellitat, Tri-iso-oktyltrimellitat (Gemisch) sowie Tri-C₆-C₈-alkyl, Tri-C₆-C₁₀-alkyl-, Tri-C₇-C₉-alkyl- und Tri-C₉-C₁₁-alkyl-trimellitate; gebräuchliche Abkürzungen sind TOTM (Trioktyltrimellitat, Tri-2-ethylhexyl-trimellitat), TIDTM (Triisodecyltrimellitat) und TITDTM (Triisotridecyltrimellitat)
(iv) Epoxyweichmacher; in der Hauptsache sind das epoxidierte ungesättigte Fettsäuren z.B. epoxidiertes Sojabohnenöl
(v) Polymerweichmacher: Die gebräuchlichsten Ausgangsmaterialien für ihre Herstellung sind Dikarbonsäuren wie Adipin-, Phthal-, Azelain- und Sebazinsäure; Diole wie 1,2-Propandiol, 1,3-Butandiol, 1,4-Butandiol, 1,6-Hexandiol, Neopentylglykol und Diethylenglykol, (s. ADMEX^{®}-Typen der Velsicol Corp. und PX-811 der Asahi Denka)
(vi) Phosphorsäureester: Eine Definition dieser Ester ist im weiter vorn genannten "TASCHENBUCH der Kunststoffadditive " Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyldi-phenylphosphat, Kresyldi-phenylphosphat, Resorzin-bis-diphenylphosphat, polymeres Resorzin-phenylphosphat, Triphenylphosphat, Trikresylphosphat und Trixylenylphosphat; bevorzugt sind Tri-2-ethylhexyl-phosphat sowie Reofos^{®} 50 und 95 (Ciba Spezialitätenchemie)
(vii) Chlorierte Kohlenwasserstoffe (Paraffine)
(viii) Kohlenwasserstoffe
(ix) Monoester, z.B. Butyloleat, Phenoxyethyloleat, Tetrahydrofurfuryloleat und Alkylsulfonsäureester
(x) Glykolester, z.B. Diglykolbenzoate
(xi) Zitronensäureester, z.B. Tributylzitrat und Acetyltributylzitrat wie in PS - WO 02/05206 beschrieben
(xii) Perhydrophthal-, -isophthal- und -terephthalester sowie Perhydroglykol- und diglykolbenzoatester; bevorzugt ist Perhydro-diisononylphthalat (Hexamoll^{®} DINCH - Hersteller BASF) wie in DE-A 197,56,913, DE-A 199,27,977, DE-A 199,27,978 und DE-A 199,27,979 beschrieben.
(xiii) Rizinussöl basierte Weichmacher (Soft-N-Safe^{®}, Hersteller Fa. DANISCO)
(xiv) Terpolymere Keton-Ethylen-Ester Elvaloy^{®} KEE, (Elvaloy^{®} 741, Elvaloy^{®} 742, Hersteller Fa. DuPont)

Eine Definition dieser Weichmacher und Beispiele für solche sind in "TASCHENBUCH der Kunststoffadditive ", R. Gächter/H. Müller, Carl Hanser Verlag, 3. Aufl., 1989, Kapitel 5.9.6, Seiten 412-415, sowie in "PVC Technology ", W.V. Titow, 4th. Ed., Elsevier Publ., 1984, Seiten 165-170 angegeben. Es können auch Mischungen unterschiedlicher Weichmacher verwandt werden. Die Weichmacher können in einer Menge von beispielsweise von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorsysteme etwa 0,1 Gew.-% oder mehr, beispielsweise etwa 0,5 Gew.-%, 1 Gew.-%, 2 Gew.-% oder 5 Gew.-%.
In einer besonders bevorzugten Ausführungsform der Erfindung ist der Weichmacher ein Phosphorsäureester. In einer weiteren, besonders bevorzugten Ausführungsform des erfindungsgemäßen, flammgeschützten halogenhaltigen Polymers sind zusätzlich weitere Flammschutzmittel enthalten. Bevorzugt ist als Flammschutzmittel ein natürlicher oder synthetischer Zeolith.

In einer ebenfalls besonders bevorzugten Ausführungsform des erfindungsgemäßen flammgeschützten halogenhaltigen Polymers ist zusätzlich ein Rauchverminderer zugegeben.

In einer besonders bevorzugten Ausführungsform des erfindungsgemäßen flammgeschützten halogenhaltigen Polymers ist der Rauchverminderer Zinkstannat und/oder Zinkhydroxystannat und/oder Zinkmolybdat und/oder Ammoniumoktamolybdat.

In einer weiteren Ausführungsform des erfindungsgemäßen flammgeschützten halogenhaltigen Polymers ist zusätzlich ein Weichmacher enthalten. Bevorzugt ist dieser Weichmacher ein Phosphorsäureester.

### Weitere Flammschutzmittel und Rauchverminderer

Als Flammschutzmittel kommen insbesondere in Weich-PVC bevorzugt in Betracht: oligomere oder polymere Phosphorsäurephenolester. Ganz besonders bevorzugt sind Flammschutzmittel auf Nanoclay-Basis (organomodified clay; s. Beyer, G. Journal of Fire Sciences, 2007, 25, 65-78). Als Rauchverminderer werden bevorzugt anorganische Substanzen auf Zinkoxid- oder Zinnoxidbasis bzw. als Zink(hydroxo)stannat, Ammonium(okta)molybdat, Zinkmolybdat und Zinkborat oder Magnesium- Zink-Komplexoxide der Formel (Mg,Zn)O eingesetzt (WO-A 2008/023249).

Ein erfindungsgemäßes Stabilisatorsystem kann die beschriebenen Flammschutzmittel in einer Menge von bis zu etwa 70 Gew.-%, insbesondere bis etwa 50 Gew.-%, enthalten.

Definitionen und Beispiele für weitere Zusätze wie Schlagzähmodifikatoren und Verarbeitungshilfen, Geliermittel, Metalldesaktivatoren, Antifogging-Agents sowie Kompatibilisatoren sind beschrieben in "Handbuch der Kunststoffadditive", R. Gächter/H. Müller, Carl Hanser Verlag, 3. Aufl., 1989, sowie 4. Aufl. 2001 und im "Handbook of Polyvinyl Chloride Formulating" E. J. Wickson, J. Wiley & Sons, 1993, sowie in "Plastics Additives" G. Pritchard, Chapman & Hall, London, Ist Ed., 1998. Schlagzähmodifikatoren sind ferner ausführlich beschrieben in "Impact Modifiers for PVC", J. T. Lutz/D. L. Dunkelberger, John Wiley & Sons, 1992.

Ein weiterer Gegenstand der vorliegenden Erfindung sind Polymerzusammensetzungen, die mindestens ein erfindungsgemäßes halogenhaltiges Polymer enthalten.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA EthylenVinylacetat. Es kommen insbesondere auch Styrol-Acrylnitril-Copolymerisate auf AcrylatBasis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Copolymeren NBR, NAR und/oder EVA, insbesondere jedoch EVA.

Ein weiterer Gegenstand der Erfindung sind Formkörper, aus einem erfindungsgemäßen flammgeschützten halogenhaltigen Polymer.

Ebenfalls ein weiterer Gegenstand der Erfindung sind Gegenstände wie Gebrauchsmittel (Gebrauchsgegenstände), die eine erfindungsgemäße Zusammensetzung enthalten, welches das ebenfalls enthaltene halogenhaltige Polymer stabilisiert.

Ein weiterer Gegenstand der vorliegenden Erfindung ist dementsprechend die Verwendung eines flammgeschützten halogenhaltigen Polymers zur Herstellung von Gebrauchsgegenständen.

Bevorzugt ist auch die Verwendung von Gebrauchsartikeln, die sich durch eine besondere feine Schaumstruktur auszeichnen. Dies gilt für Hart-, Weich- und Halbhart-PVC. Besonderes wichtig ist dieser Aspekt bei Tapeten und Fußböden aus Weich-PVC.

Die mitverwendbaren Verbindungen sowie die halogenhaltigen Polymere sind dem Fachmann allgemein bekannt und werden detailliert beschrieben in "Handbuch der Kunstoffadditive", R. Gächter/H. Müller, Carl Hanser Verlag, 3. Aufl., 1989 und 4. Aufl. 2001, in DE-A 197,41,778 A1 und EP-A 0,967,245 auf welche hiermit ausdrücklich Bezug genommen wird.

Die erfindungsgemäße Stabilisierung eignet sich insbesondere sowohl für chlorhaltige Polymerzusammensetzungen, die nicht weichgemachte bzw. weichmacherfreie oder im Wesentlichen weichmacherfreie Zusammensetzungen darstellen, als auch für weichgemachte Zusammensetzungen.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien, Blisterpackungen (auch hergestellt nach dem Luvithermverfahren), Profile, Sidings, Fittings, Bürofolien, Margarinebecher, Pralinenverpackungen und Apparategehäuse, Isolatoren, Computergehäuse und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile (Blasformen,), Bürofolien und Folien für Traglufthallen geeignet. Beispiele für die Anwendung der erfindungsgemäßen Zusammensetzungen als Plastisole sind Spielwaren (Rotationsformen), Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe "Kunststoffhandbuch PVC", Band 2/2, W. Becker/H. Braun, 2. Aufl. 1985, Carl Hanser Verlag, S. 1236-1277.

Die folgenden Formulierungen wurden geprüft:

### I. Herstellung der Walzfelle:

Die nach Tabelle 1 **(R-1, R-2, R-3** und **R-4)** zubereiteten Trockenmischungen werden auf einem Collin-Labormeßwalzwerk (Modell: W100E, BJ: 2005, Fa. COLLIN) jeweils 5 Minuten (Walzendurchmesser: 110 mm, 15 UpM, Friktion: -15 %) bei der angegebenen Temperatur plastifiziert. Die so erhaltenen Folien (Dicke 0,3mm) werden weiteren Messungen zugeführt.

### II. Durchführung des statischen Hitzetestes (SHT):

Von den nach I hergestellten Walzfellen werden Teststreifen (15mm x 15mm) ausgeschnitten. Diese werden in einem METRASTAT-Testofen IR 700 (DR. STAPFER GmbH, Düsseldorf) bei der angegebenen Temperatur bis zur signifikanten Verfärbung belastet. Im Anschluss wird der YI-Wert (Yellowness-Index) nach DIN 53381 mit einem Spectro-Guide Farbmessgerät (Fa. BYK-GARDNER) bestimmt und mit dem YI-Wert des unbelasteten Walzfelles verglichen (Nullminutenwert). Die Ergebnisse sind tabellarisch zusammengefasst. Es gilt, je kleiner der YI-Wert zu einem bestimmten Zeitpunkt, desto besser ist das Farbverhalten.

### III. Durchführung der Flammschutzprüfung:

Die oben hergestellten Walzfelle werden zu Pressplatten (120x100x3mm) verarbeitet. Der UL94-Test wurde nach dem in "Flammability of Plastic Materials for Parts in Devices and Appliances", 5th edition, October, 1996 durchgeführt.

### Beispiele 1 bis 4: Prüfung in Weich-PVC:

Folgende Trockenmischungen werden hergestellt (Tab. 1)- Einwaage in Gew.-Teilen:

**Tab. 1: Formulierungen**

| Komponenten | **(R-1)** | **(R-2)** | **(R-3)** | **(R-4)** |
|---|---|---|---|---|
| PVC (Evipol SH 7020) K-Wert = 70 | 100 | 100 | 100 | 100 |
| Weichmachern ¹⁾ (DINP) | 50 | 50 | 50 | 50 |
| Zinkstearat | 0,6 | 0,6 | 0,6 | 0,6 |
| Hydrotalcit ²⁾ | 2,9 | 2,9 | 2,9 | 2,9 |
| Antioxidans (Bisphenol A) | 0,5 | 0,5 | 0,5 | 0,5 |
| Flammschutzmittel 1 (ATH)³⁾ | 60 | 25 | 25 | 25 |
| Flammschutzmittel 2 (MPP)⁴⁾ | -- | 5 | -- | -- |
| Flammschutzmittel 3 (MC)⁵⁾ | -- | -- | 5 | -- |
| Flammschutzmittel 4 ⁶⁾ | -- | -- | -- | 5 |

| | | | | |
|---|---|---|---|---|
| ¹⁾ Diisononylphthalat, ex BASF ²⁾ Sorbacid 911, ex SÜD CHEMIE ³⁾ Aluminiumtrihydroxid; APYRAL40CD, ex NABALTEC ⁴⁾ Melaminpolyphosphat; BUDIT 3141, ex C.F. BUDENHEIM ⁵⁾ Melamincyanurat; BUDIT 315, ex C.F. BUDENHEIM ⁶⁾ Nanoclay; NANOFIL 784, ex ROCKWOOD | | | | |

**Tab. 2: SHT (200 °C) nach II**

| Zeit [Min] | **(R-1)** [YI] | **(R-2)** [YI] erfindungsgemäss | **(R-3)** [YI] erfindungsgemäss | **(R-4)** [YI] |
|---|---|---|---|---|
| 0 | 8,8 | 4,7 | 5,6 | 43,8 |
| 6 | 11,0 | 5,6 | 6,5 | 46,0 |
| 12 | 11,9 | 6,2 | 7,3 | 50,6 |
| 18 | 13,5 | 7,4 | 8,5 | 60,1 |
| 24 | 15,4 | 9,5 | 9,6 | 72,6 |
| 30 | 18,2 | 9,7 | 11,1 | 90,7 |
| 36 | 21,4 | 11,9 | 13,6 | 108,3 |
| 42 | 25,8 | 14,2 | 15,9 | 113,8 |
| 48 | 31,4 | 17,1 | 18,5 | |
| 54 | 38,2 | 21,0 | 21,5 | |
| 60 | 51,6 | 24,8 | 24,9 | |
| 66 | 69,6 | 29,3 | 28,2 | |
| 72 | 94,4 | 32,8 | 32,5 | |
| 78 | 111,8 | 41,0 | 37,9 | |
| 84 | 117,9 | 50,8 | 44,8 | |
| 90 | 117,9 | 60,2 | 61,3 | |

Wie ersichtlich, sind die erfindungsgemäßen Formulierungen **(R-2)** und **(R-3)** sowohl in der Anfangsfarbe als auch in der Farbhaltung signifikant besser als die nicht erfindungsgemäßen Formulierungen **(R-1)** und **(R-4).** Für eine Flammschutzprüfung nach UL94 wurde die Formulierung **(R-2)** ausgewählt und mit dem Stand der Technik (Formulierung **(R-1))** verglichen. Es wurde ein Ergebnis erzielt, das mit V0 zu klassifizieren war. Dies war überraschend, da erfindungsgemäß 30phr Flammschutzmittel eingesetzt wurden und mit 60phr Flammschutzmittel als SdT zu vergleichen war. Ferner weisen die erfindungsgemäßen Formulierungen **(R-2)** und **(R-3)** die besseren mechanischen Eigenschaften als die nicht erfindungsgemäße Formulierung **(R-1)** auf.

## Patentansprüche

1. Flammgeschütztes halogenhaltiges Polymer enthaltend die Komponenten
(A) mindestens ein Hydroxid ausgewählt aus der Gruppe bestehend aus Aluminiumhydroxid, Magnesiumhydroxid, Calciumhydroxid, Zinkhydroxid, deren Doppelhydroxide und Hydromagnesit,
(B) mindestens ein oder mehrere Melamin- und/oder Guanidinsalze,
(C) mindestens einen Thermostabilisator, wobei dieser ein Metallcarboxylat ist,
wobei das halogenhaltige Polymer Polyvinylchlorid ist, **dadurch gekennzeichnet**, das die Komponente (A) beziehungsweise deren Mischungen in einer Menge von 20 bis 80 Gew.-Teilen, bezogen auf 100 Gew.-Teil Polyvinylchlorid angewandt werden.

2. Polymer gemäß Anspruch 1, **dadurch gekennzeichnet, dass** die Komponente
(A) Aluminiumhydroxid und/oder Magnesiumhydroxid und/oder
(B) Melamincyanurat und/oder ein Melaminphosphat und/oder ein Guanidinphosphat ist.

3. Polymer gemäß Anspruch 1 oder 2, **dadurch gekennzeichnet, dass** Komponente (B) ausgewählt ist aus der Gruppe bestehend aus Melamincyanurat, Melamin-ortho-Phosphat, Melanninpyrophosphat, Melamin-polyphosphat, Melaminborat und Guanidinphosphat.

4. Polymer gemäß einem der Ansprüche 1 bis 3, **dadurch gekennzeichnet, dass** zusätzlich ein weiteres Flammschutzmittel enthalten ist,

5. Polymer gemäß einem der Ansprüche 1 bis 4, **dadurch gekennzeichnet, dass** als weiteres Flammschutzmittel ein natürlicher oder synthetischer Zeolith enthalten ist.

6. Polymer gemäß einem der Ansprüche 1 bis 5, **dadurch gekennzeichnet, dass** zusätzlich ein Rauchverminderer enthalten ist.

7. Polymer gemäß Anspruch 6, **dadurch gekennzeichnet, dass** der Rauchverminderer Zinkstannat und/oder Zinkhydroxystannat und/oder Zinkmolybdat und/oder Ammoniumoktamolybdat ist.

8. Polymer gemäß einem der Ansprüche 1 bis 7, **dadurch gekennzeichnet, dass** zusätzlich ein Weichmacher enthalten ist.

9. Polymer gemäß einem der Ansprüche 1 bis 8, **dadurch gekennzeichnet, dass** der Weichmacher ein Phosphorsäureester ist.

10. Polymerzusammensetzungen enthaltend mindestens ein flammgeschütztes halogenhaltiges Polymer gemäß einem der Ansprüche 1 bis 9.

11. Formkörper aus einem flammgeschützten halogenhaltigen Polymer nach einem der Ansprüche 1 bis 9.

12. Verwendung eines flammgeschützten halogenhaltigen Polymers gemäß einem der Ansprüche 1 bis 9 zur Herstellung von Gebrauchsgegenständen.

## Claims

1. Flame-proof halogen-containing polymer comprising the components
(A) at least one hydroxide selected from the group consisting of aluminum hydroxide, magnesium hydroxide, calcium hydroxide, zinc hydroxide, their double hydroxides and hydromagnesite,
(B) at least one or more melamine- and/or guanidine salts,
(C) at least one thermostabilizer, which is a metal carboxylate,
wherein the halogen-containing polymer is polyvinyl chloride, **characterized in that** the component (A), respectively its mixtures, are applied in an amount of 20 to 80 parts per weight, relative to 100 parts per weight polyvinyl chloride.

2. Polymer according to claim 1, **characterized in that** the component is
(A) aluminum hydroxide and/or magnesium hydroxide and/or
(B) melamine cyanurate and/or a melamine phosphate and/or a guanidine phosphate.

3. Polymer according to claim 1 or 2, **characterized in that** component (B) is selected from the group consisting of melamine cyanurate, melamine-orthophosphate, melamine pyrophosphate, melamine polyphosphate, melamine borate and guanidine phosphate.

4. Polymer according to one of claims 1 to 3, **characterized in that** a further flame retardant is comprised.

5. Polymer according to one of claims 1 to 4, **characterized in that**, as further flame retardant, a natural or synthetic zeolithe is comprised.

6. Polymer according to one of claims 1 to 5, **characterized in that** additionally a smoke suppressant is comprised.

7. Polymer according to claim 6, **characterized in that** the smoke suppressant is zinc stannate and/or zinc hydroxy stannate and/or zinc molybdate and/or ammonium octamolybdate.

8. Polymer according to one of claims 1 to 7, **characterized in that** additionally a plasticizer is comprised.

9. Polymer according to one of claims 1 to 8, **characterized in that** the plasticizer is a phosphoric acid ester.

10. Polymer compositions comprising at least one flame-proof halogen-containing polymer according to one of claims 1 to 9.

11. Molded article made of a flame-proof halogen-containing polymer according to one of claims 1 to 9.

12. Use of a flame-proof halogen-containing polymer according to one of claims 1 to 9 for the manufacture of commodity articles.

## Revendications

1. Polymère halogéné ignifugé, contenant les composants suivants :
(A) au moins un hydroxyde choisi dans le groupe comprenant l'hydroxyde d'aluminium, l'hydroxyde de magnésium, l'hydroxyde de calcium, l'hydroxyde de zinc, leurs hydroxydes doubles et l'hydromagnésite,
(B) au moins un ou plusieurs sels de mélamine et/ou de guanidine,
(C) au moins un stabilisant thermique, celui-ci étant un carboxylate de métal.
dans lequel le polymère halogéné est du chlorure de polyvinyle, **caractérisé en ce que** le composant (A), respectivement ses mélanges, sont utilisés dans une quantité de 20 à 80 parties en poids, par rapport à 100 parties en poids de chlorure de polyvinyle.

2. Polymère selon la revendication 1, **caractérisé en ce que** le composant
(A) est de l'hydroxyde d'aluminium et/ou de l'hydroxyde de magnésium et/ou
(B) du cyanurate de mélamine et/ou un phosphate de mélamine et/ou un phosphate de guanidine.

3. Polymère selon la revendication 1 ou la revendication 2, **caractérisé en ce que** le composant (B) est choisi dans le groupe comprenant le cyanurate de mélamine, l'orthophosphate de mélamine, le pyrophosphate de mélamine, le polyphosphate de mélamine, le borate de mélamine et le phosphate de guanidine.

4. Polymère selon l'une des revendications 1 à 3, **caractérisé en ce qu'**il contient en plus un autre agent ignifuge.

5. Polymère selon l'une des revendications 1 à 4, **caractérisé en ce qu'**il contient une zéolite naturelle ou synthétique comme autre agent ignifuge.

6. Polymère selon l'une des revendications 1 à 5, **caractérisé en ce qu'**il contient en plus un agent réducteur de fumée.

7. Polymère selon la revendication 6, **caractérisé en ce que** l'agent réducteur de fumée est du stannate de zinc et/ou de l'hydroxystannate de zinc et/ou du molybdate de zinc et/ou de l'octamolybdate d'ammonium.

8. Polymère selon l'une des revendications 1 à 7, **caractérisé en ce qu'**il contient en plus un plastifiant.

9. Polymère selon l'une des revendications 1 à 8, **caractérisé en ce que** le plastifiant est un ester d'acide phosphorique.

10. Compositions de polymères contenant au moins un polymère halogéné ignifugé selon l'une des revendications 1 à 9.

11. Corps moulé à partir d'un polymère halogéné ignifugé selon l'une des revendications 1 à 9.

12. Utilisation d'un polymère halogéné ignifugé selon l'une des revendications 1 à 9 pour fabriquer des objets d'usage courant.
